# EUROPÄISCHE PATENTSCHRIFT

(11) **EP 2 687 731 B1**
(45) Veröffentlichungstag und Bekanntmachung des Hinweises auf die Patenterteilung: **07.01.2015**
(21) Anmeldenummer: 13174336.1
(22) Anmeldetag: 28.06.2013
(51) Int. Cl.: F16B 1/00, F16B 21/07

(54) **Vorrichtung zum Befestigen eines Anbauteiles an einem Trägerteil mit Montagekontrolle**
Device for securing an attachment section to a carrier with assembly check
Dispositif de fixation d'une pièce rapportée montée sur un élément de support avec contrôle du montage

(30) Priorität: 17.07.2012 DE 102012212508
(43) Veröffentlichungstag der Anmeldung: 22.01.2014
(73) Patentinhaber: A. RAYMOND et Cie, 38000 Grenoble (FR)
(72) Erfinder: Binkert, Sven, 79774 Albbruck (DE)
(74) Vertreter: RACKETTE Partnerschaft Patentanwälte

(56) Entgegenhaltungen:
- EP-A1- 2 204 589

## Beschreibung

Die Erfindung betrifft eine Vorrichtung zum Befestigen eines Anbauteiles an einem Trägerteil mit Montagekontrolle gemäß dem Oberbegriff des Patentanspruches 1.

Eine derartige Vorrichtung ist aus EP 2 204 589 A1 bekannt. Die vorbekannte Vorrichtung zum Befestigen eines Anbauteiles an einem Trägerteil verfügt über ein mit einem Einsteckteil und mit einem Spreizstift als Spreizniet ausgebildetes Befestigungselement, das in radialer Richtung verformbare, an dem Einsteckteil ausgebildete Befestigungsarme aufweist, die mit dem Spreizstift radial nach außen bewegbar sind. Mit den Befestigungsarmen ist durch Hintergriff eines Trägerteiles ein Anbauteil an dem Trägerteil befestigbar. Weiterhin ist ein ringartig ausgebildetes und bei Einklemmen zwischen dem Einsteckteil und dem Spreizstift in radialer Richtung aufweitbares Anzeigeelement vorhanden, mit dem bei einer ordnungsgemäßen Befestigung des Anbauteiles an dem Trägerteil nach einem Montagevorgang ein definierter Montageanzeigezustand eingenommen ist, bei dem ein ansonsten verborgener Außenrand des Anzeigeelementes in radialer Richtung über einen Kopf des Spreizstiftes übersteht und damit eine Kontrolle eines korrekten Montagevorganges ermöglicht. Hierfür ist ein nicht unerheblicher zusätzlicher Kraftaufwand erforderlich.

Aus DE 10 2010 008 458 A1 ist eine Vorrichtung zum Befestigen eines Anbauteiles an einem Trägerteil mit einem Befestigungselement mit an einer Deckplatte angeformten Federschenkeln bekannt, die jeweils über einen Innenflügel sowie über einen Außenflügel verfügen und mit Abstützwangen ausgebildet sind, die in in den Außenflügeln ausgebildeten Abstützwangenfreimachungen angeordnet sind. Bei Einfügen des Befestigungselementes in eine in dem Anbauteil ausgebildete Anbauteilausnehmung beziehungsweise in eine in dem Trägerteil ausgebildete Trägerteilausnehmung federn die Abstützwangen unter Annähern der Innenflügel radial nach innen, bevor sie in den Hintergriff mit dem Trägerteil gelangen.

Der Erfindung liegt die Aufgabe zugrunde, eine Vorrichtung zum Befestigen eines Anbauteiles an einem Trägerteil mit Montagekontrolle anzugeben, bei dem der Montageanzeigezustand weitgehend kräftefrei eingenommen wird.

Diese Aufgabe wird bei einer Vorrichtung zum Befestigen eines Anbauteiles an einem Trägerteil mit Montagekontrolle der eingangs genannten Art erfindungsgemäß mit den kennzeichnenden Merkmalen des Patentanspruches 1 gelöst.

Dadurch, dass das Anzeigeelement während des Montagevorganges durch Einwirken wenigstens eines Befestigungsarmes auf den länglichen Drehschaft gedreht wird, ist bei einer einfach durchführbaren optischen Kontrolle der für die Montagekontrolle erforderliche Kraftaufwand verschwindend gering.

Weitere zweckmäßige Ausgestaltungen sind Gegenstand der Unteransprüche.

Weitere zweckmäßige Ausgestaltungen und Vorteile der Erfindung ergeben sich aus der nachfolgenden Beschreibung eines Ausführungsbeispieles der Erfindung mit Bezug auf die Figuren der Zeichnung.

Es zeigen:
- Fig. 1: in einer perspektivischen Ansicht ein Ausführungsbeispiel einer erfindungsgemäßen Vorrichtung mit einem in ein Befestigungselement eingefügtes Anzeigeelement in einer Vormontagestellung,
- Fig. 2: in einer perspektivischen Ansicht das Ausführungsbeispiel gemäß Fig. 1 mit Blick auf eine bei bestimmungsgemäßer Anordnung einem Anbauteil zugewandte Unterseite einer Deckplatte der Vorrichtung,
- Fig. 3: in einer Draufsicht das Befestigungselement bei dem Ausführungsbeispiel gemäß Fig. 1 und Fig. 2 mit Blick auf die bei bestimmungsgemäßer Anordnung einem Anbauteil abgewandten Oberseite der Deckplatte,
- Fig. 4: in einer perspektivischen Ansicht das Anzeigeelement bei dem Ausführungsbeispiel gemäß Fig. 1 und Fig. 2, das in einem Fußabschnitt mit Federzungen und mit einem Einwirkabschnitt ausgebildet ist,
- Fig. 5: in einem Längsschnitt das Ausführungsbeispiel gemäß Fig. 1 und Fig. 2 in einer Vormontageanordnung vor Beginn eines Montagevorganges,
- Fig. 6: in einem Querschnitt durch den Einwirkabschnitt des Anzeigeelementes das Ausführungsbeispiel gemäß Fig. 1 und Fig. 2 in der Vormontageanordnung gemäß Fig. 5,
- Fig. 7: in einem Querschnitt durch die Federzungen des Anzeigeelementes das Ausführungsbeispiel gemäß Fig. 1 und Fig. 2 in der Vormontageanordnung gemäß Fig. 5,
- Fig. 8: in einer Draufsicht auf die Deckplatte des Anzeigeelementes des Ausführungsbeispieles gemäß Fig. 1 und Fig. 2 in der Vormontageanordnung gemäß Fig. 5 mit dem Anzeigeelement in einer Vormontagestellung,
- Fig. 9: in einem Längsschnitt entsprechend Fig. 5 das Ausführungsbeispiel gemäß Fig. 1 und Fig. 2 während des Montagevorganges in einer Zwischenmontageanordnung mit maximal eingefederten Befestigungsarmen,
- Fig. 10: in einem Querschnitt durch den Einwirkabschnitt des Anzeigeelementes entsprechend Fig. 6 das Ausführungsbeispiel gemäß Fig. 1 und Fig. 2 in der Zwischenmontageanordnung gemäß Fig. 9,
- Fig. 11: in einem Querschnitt durch die Federzungen des Anzeigeelementes entsprechend Fig. 7 das Ausführungsbeispiel gemäß Fig. 1 und Fig. 2 in der Zwischenmontageanordnung gemäß Fig. 9,
- Fig. 12: in einer Draufsicht auf die Deckplatte des Anzeigeelementes entsprechend Fig. 8 das Ausführungsbeispiel gemäß Fig. 1 und Fig. 2 in der Zwischenmontageanordnung gemäß Fig. 9 mit dem Anzeigeelement in einer Zwischenmontagestellung,
- Fig. 13: in einem Längsschnitt entsprechend Fig. 5 das Ausführungsbeispiel gemäß Fig. 1 und Fig. 2 nach Beendigung des Montagevorganges in einer Endmontageanordnung,
- Fig. 14: in einem Querschnitt durch den Einwirkabschnitt des Anzeigeelementes entsprechend Fig. 6 und Fig. 10 das Ausführungsbeispiel gemäß Fig. 1 und Fig. 2 in der Endmontageanordnung gemäß Fig. 13,
- Fig. 15: in einem Querschnitt durch die Federzungen des Anzeigeelementes entsprechend Fig. 7 und Fig. 11 das Ausführungsbeispiel gemäß Fig. 1 und Fig. 2 in der Endmontageanordnung gemäß Fig. 13 und
- Fig. 16: in einer Draufsicht auf die Deckplatte des Anzeigeelementes entsprechend Fig. 8 und Fig. 12 das Ausführungsbeispiel gemäß Fig. 1 und Fig. 2 in der Endmontageanordnung gemäß Fig. 13 mit dem Anzeigeelement in einer Endmontagestellung.

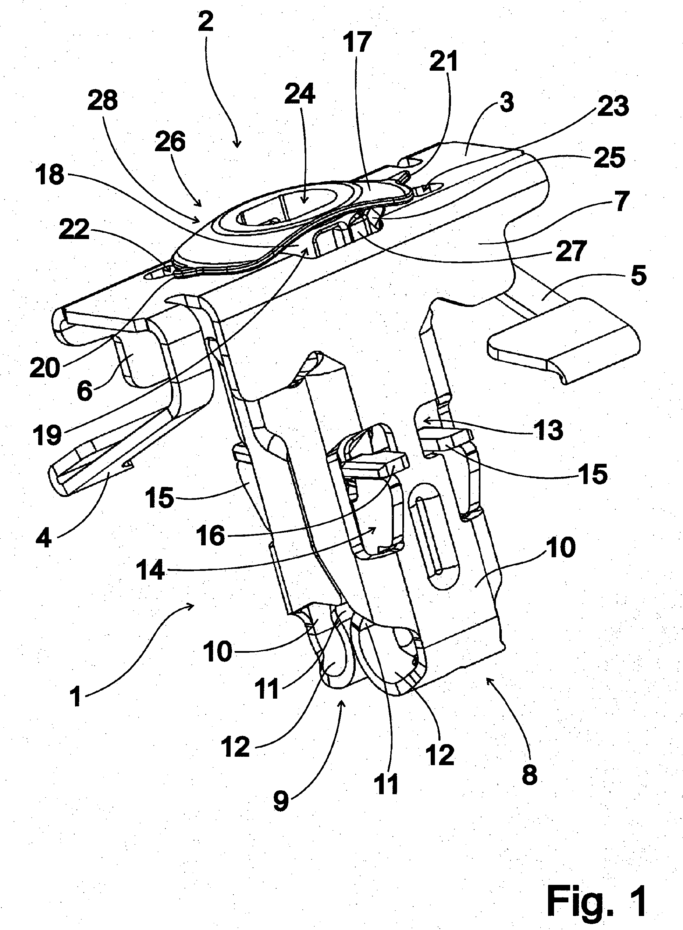

Fig. 1 zeigt in einer perspektivischen Ansicht ein Ausführungsbeispiel einer erfindungsgemäßen Vorrichtung, die zum einen über ein durch einen Stanz-Biege-Prozess aus einem Metallblech einteilig hergestelltes Befestigungselement 1 in Gestalt einer Airbag-Befestigungsklammer und über ein in der Anordnung gemäß Fig. 1 in das Befestigungselement 1 eingefügtes Anzeigeelement 2 verfügt, das vorzugsweise über ein Spritzgussverfahren aus Kunststoff hergestellt ist. Das Befestigungselement 1 weist eine im Wesentlichen rechteckförmige Deckplatte 3 auf, an deren kurzen Randseiten einander diametral gegenüber liegende und sich von einer in der Darstellung gemäß Fig. 1 dem Betrachter zugewandten Oberseite der Deckplatte 3 schräg weg erstreckende Abstützarme 4, 5 ausgebildet sind. An den langen Randseiten der Deckplatte 3 weist das Befestigungselement 1 jeweils eine Seitenwand 6, 7 auf, die sich im Wesentlichen rechtwinklig zu der Deckplatte 3 ausgerichtet von der Oberseite der Deckplatte 3 weg erstrecken.

An jeder Seitenwand 6, 7 ist auf der der Deckplatte 3 abgewandten Seite jeweils ein länglicher Befestigungsarm 8, 9 ausgebildet, der einen Außenflügel 10 und einen Innenflügel 11 aufweist. Die Außenflügel 10 und die Innenflügel 11 sind über jeweils einen der Deckplatte 3 gegenüber liegend angeordneten Umbiegeabschnitt 12 miteinander verbunden, wobei die Außenflügel 10 radial außen liegen und die einander gegenüber liegend angeordneten Innenflügel 11 gehäuseartig umschließen.

Weiterhin lässt sich der Darstellung gemäß Fig. 1 entnehmen, dass jeder Außenflügel 10 mit zwei Abstützwangenfreimachungen 13, 14 ausgebildet ist, die in Längsrichtung der Befestigungsarme 8, 9 in etwa mittig angeordnet sind und durch die jeweils eine Abstützwange 15, 16 durchgreift, die paarweise an dem dem jeweiligen Außenflügel 10 benachbarten Innenflügel 11 des betreffenden Befestigungsarmes 8, 9 angebracht sind. Die Abstützwangen 15, 16 sind zum Hintergriff mit einem in Fig. 1 nicht dargestellten Trägerteil ausgebildet und lassen sich aufgrund eines zwischen den Innenflügeln 11 ausgebildeten Abstandes in radialer Richtung wenigstens so weit einfedern, dass sie bündig mit der radial nach außen gewandten Außenseite der Befestigungsarme 8, 9 abschließen.

Weiterhin lässt sich der Darstellung gemäß Fig. 1 entnehmen, dass das ebenfalls länglich ausgebildete Anzeigeelement 2 mit einem in der in Fig. 1 dargestellten Vormontageanordnung kuppelartig von der Deckplatte 3 weg gewölbten Kuppelschirm 17 und mit einem Drehschaft 18 ausgebildet ist, der durch eine in der Deckplatte 3 des Befestigungselementes 1 eingebrachte Schaftausnehmung 19 durchgreift und zwischen den Befestigungsarmen 8, 9 angeordnet ist. Weiterhin lässt sich der Darstellung gemäß Fig. 1 entnehmen, dass an dem Kuppelschirm 17 einander diametral gegenüber liegend zwei Anzeigevorsprünge 20, 21 ausgebildet sind, die in der Vormontageanordnung gemäß Fig. 1 in Umfangsrichtung benachbart zu in der Deckplatte 3 des Befestigungselementes 1 eingebrachten Referenzausnehmungen 22, 23 liegen. Der Drehschaft 18 wiederum weist eine mittige, den Kuppelschirm 17 durchbrechende Werkzeugaufnahmevertiefung 24 auf, die zum Eingriff mit einem in Fig. 1 nicht dargestellten Dreh-Schub-Werkzeug ausgebildet ist, mit dem, wie weiter unten näher erläutert wird, das Anzeigeelement 2 gegenüber dem Befestigungselement 1 drehbar und in axialer Richtung verschiebbar ist.

Weiterhin lässt sich der Darstellung gemäß Fig. 1 entnehmen, dass jeweils entlang eines Randabschnittes der Schaftausnehmung 19 eine radial nach innen in die Schaftausnehmung 19 hinein ragende Drehanschlagszunge 25, 26 einer Anschlagsanordnung ausgebildet ist, an die in der Vormontageanordnung gemäß Fig. 1 in Umfangsrichtung eine an dem Drehschaft 18 ausgebildete Drehanschlagsnocke 27, 28 einer Nockenanordnung anschlägt und damit eine Drehbewegung des Anzeigeelementes 2 in Bezug auf das Befestigungselement 1 bei Blick auf die Oberseite der Deckplatte 3 entgegen dem Uhrzeigersinn von den jeweiligen Anzeigevorsprüngen 20, 21 nächst benachbarten Referenzausnehmungen 22, 23 weg blockiert.

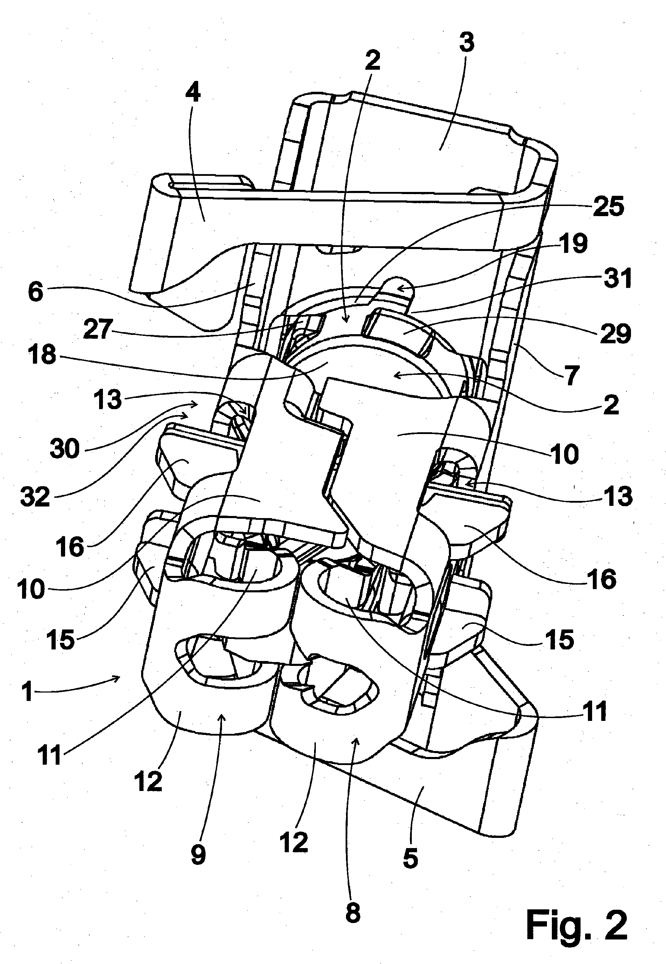

Fig. 2 zeigt in einer perspektivischen Darstellung das Ausführungsbeispiel gemäß Fig. 1 mit Blick auf eine den Befestigungsarmen 8, 9 zugewandte Unterseite der Deckplatte 3 des Befestigungselementes 1. Aus Fig. 2 ist erkennbar, dass an dem Drehschaft 18 des Anzeigeelementes 2 neben den Drehanschlagsnocken 27, 28 weiterhin zwei einander ebenfalls diametral gegenüber liegende Kombinationsanschlagsnocken 29, 30 der Nockenanordnung ausgebildet sind, die in der Vormontageanordnung gemäß Fig. 2 abschnittsweise eine an der Deckplatte 3 ausgebildete Höhenanschlagszunge 31, 32 der Anschlagsanordnung hintergreifen und damit ein unbeabsichtigtes Herausfallen des Anzeigeelementes 2 aus dem Befestigungelement 1 zuverlässig über den zum Einfügen des Anzeigeelementes 2 in das Befestigungselement 1 hinaus gehenden Widerstand sichert.

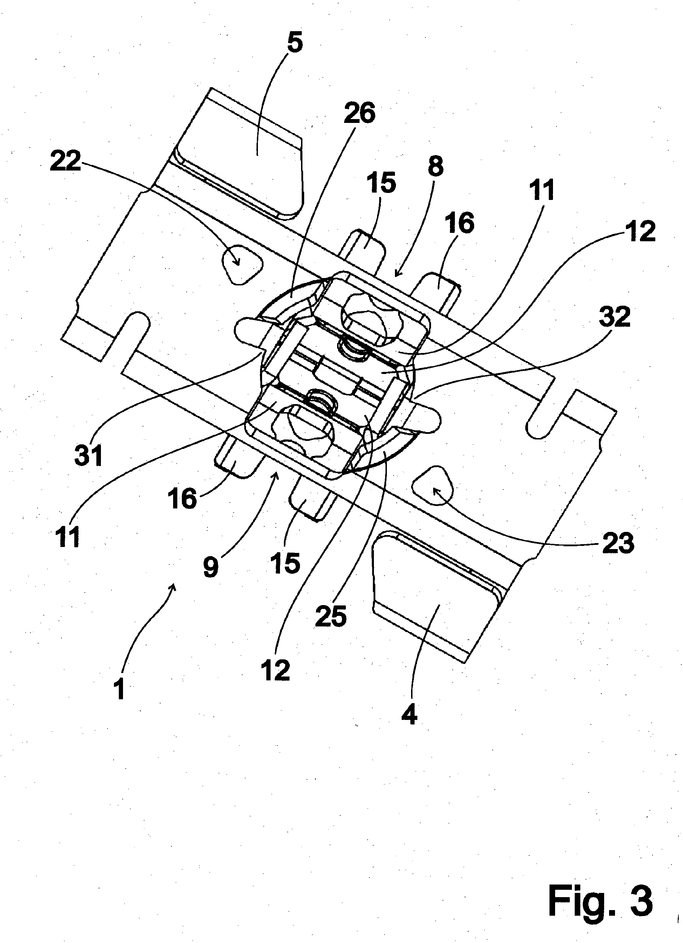

Fig. 3 zeigt das Befestigungselement 1 bei dem Ausführungsbeispiel gemäß Fig. 1 und Fig. 2 in einer Draufsicht auf die Oberseite der Deckplatte 3. Aus Fig. 3 sind deutlich die einander diametral gegenüber liegenden Drehanschlagszungen 25, 26 und die ebenfalls einander diametral gegenüber liegenden Referenzausnehmungen 22, 23 erkennbar.

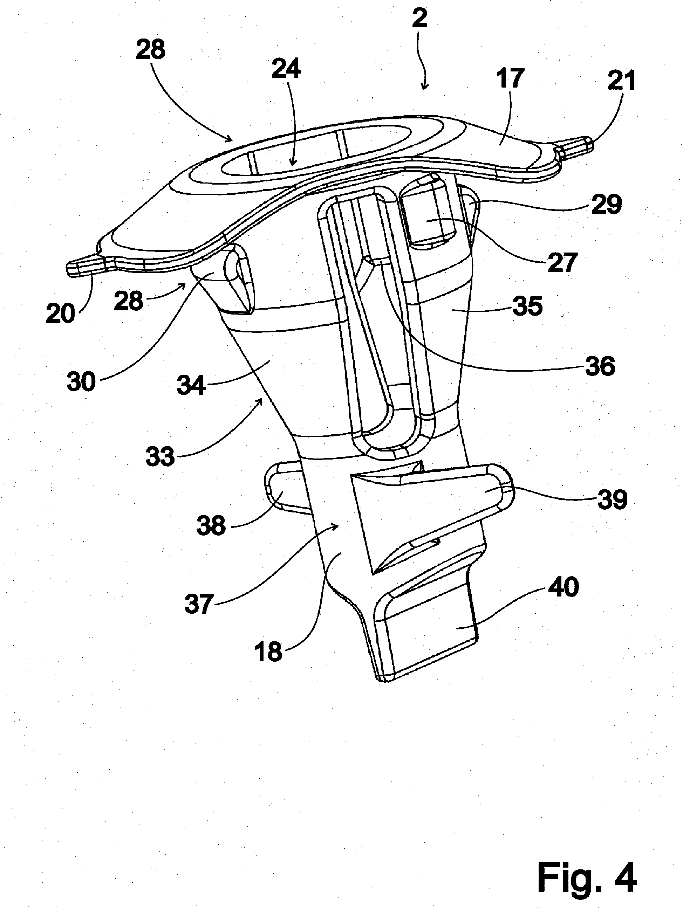

Fig. 4 zeigt in einer perspektivischen Ansicht das Anzeigeelement 2 bei dem Ausführungsbeispiel gemäß Fig. 1 und Fig. 2. Aus Fig. 4 ist erkennbar, dass der Drehschaft 18 in seinem mit dem Kuppelschirm 17 verbundenen Kopfabschnitt 33 über zwei einander gegenüber liegende Kopfwangen 34, 35 verfügt, an denen jeweils eine Drehanschlagsnocke 27, 28 sowie eine Kombinationsanschlagsnocke 29, 30 angeformt sind und die aufgrund eines zwischen ihnen ausgebildeten Kopfdurchbruches in radialer Richtung so weit radial federnd ausgebildet sind, dass die Kombinationsanschlagsnocken 29, 30 zwischen den Drehanschlagszungen 25, 26 hindurch bewegbar sind. Radial innenseitig weist jede Kopfwange 34, 35 eine in radialer Richtung vorspringende Tiefenanschlagstufe 36 auf, an die ein in die Werkzeugaufnahmevertiefung 24 in axialer Richtung eingeführtes, in Fig. 4 nicht dargestelltes Werkzeug anschlägt. Auf der dem Kuppelschirm 17 abgewandten Seite des Kopfabschnittes 33 ist der Drehschaft 18 mit einem im Wesentlichen massiven Fußabschnitt 37 ausgebildet, der zwei radial nach außen abstehende Federzungen 38, 39 einer Federanordnung trägt, die gleichsinnig schräg zum Umfang des Fußabschnittes 37 ausgerichtet sind. Auf der dem Kopfabschnitt 33 abgewandten Seite des Fußabschnittes 37 ist das Anzeigeelement 2 mit einem einen rechteckigen Querschnitt aufweisenden klingenartigen Einwirkabschnitt 40 ausgebildet, dessen Flachseiten gegenüber der Verbindungslinie zwischen den Anzeigevorsprüngen 20, 21 beispielsweise um einen spitzen Winkel verdreht ausgerichtet ist.

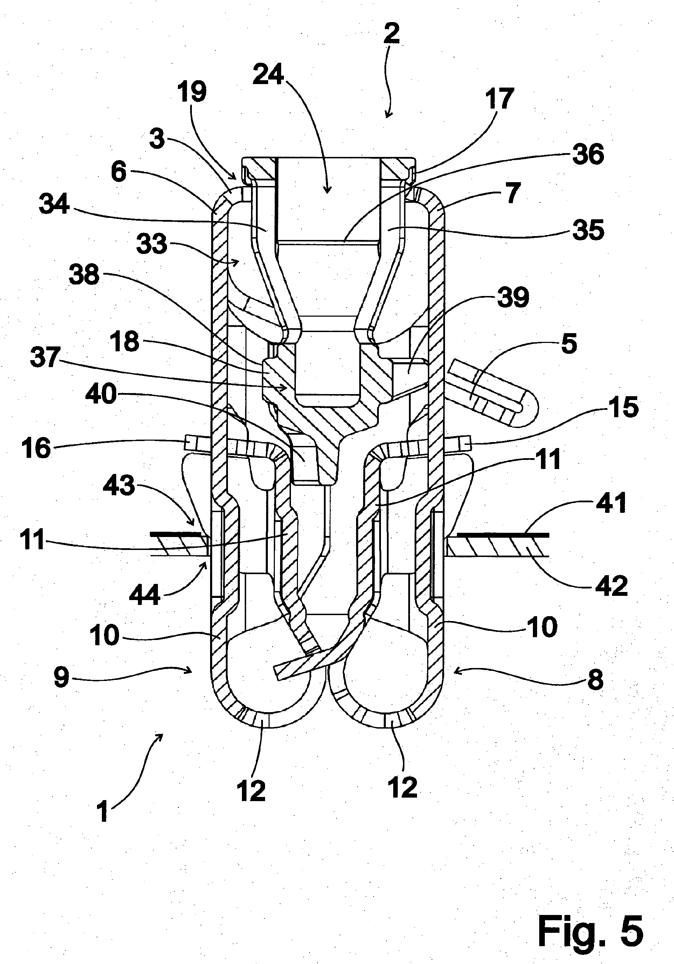

Fig. 5 zeigt in einem Längsschnitt das Ausführungsbeispiel gemäß Fig. 1 und Fig. 2 in einer Vormontageanordnung, wobei bei einem Montagevorgang ein beispielsweise verhältnismäßig dünnes Anbauteil 41 in Gestalt eines Luftsackgewebes an einem steifen Trägerteil 42 beispielsweise in Gestalt eines Karosseriebleches eines Kraftfahrzeuges zu befestigen ist. Das Anbauteil 41 weist eine Anbauteilausnehmung 43 auf, während das Trägerteil 42 über eine Trägerteilausnehmung 44 verfügt. In der in Fig. 5 dargestellten Vormontageanordnung gemäß Fig. 1 und Fig. 2 ist das Befestigungselement 1 durch die Anbauteilausnehmung 43 und durch die Trägerteilausnehmung 44 bis zum Anschlag der Abstützwangen 15, 16 an den Rand der Anbauteilausnehmung 43 so eingefügt, dass die Deckplatte 3 auf der dem Trägerteil 42 gegenüber liegenden Seite des Anbauteiles 41 angeordnet ist, während die Umbiegeabschnitte 12 auf der dem Anbauteil 41 abgewandten Seite des Trägerteiles 42 liegen. Von dieser Vormontageanordnung beginnt der weiter unten weiter erläuterte Montagevorgang.

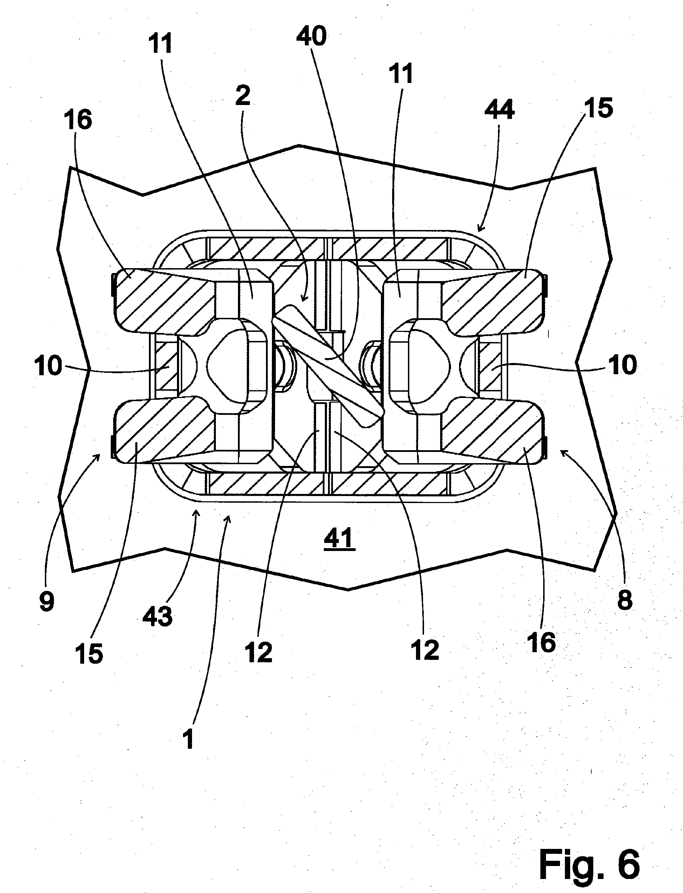

Fig. 6 zeigt in einem Querschnitt durch den Einwirkabschnitt 40 des Anzeigeelementes 2 die Vormontageanordnung gemäß Fig. 5. Aus Fig. 6 ist ersichtlich, dass in der noch relaxierten Anordnung der Innenflügel 11 der Einwirkabschnitt 40 so schräg gestellt ist, dass er im Wesentlichen einwirkungsfrei zwischen den in radialer Richtung nächst benachbarten Bereichen der Innenflügel 11 angeordnet ist.

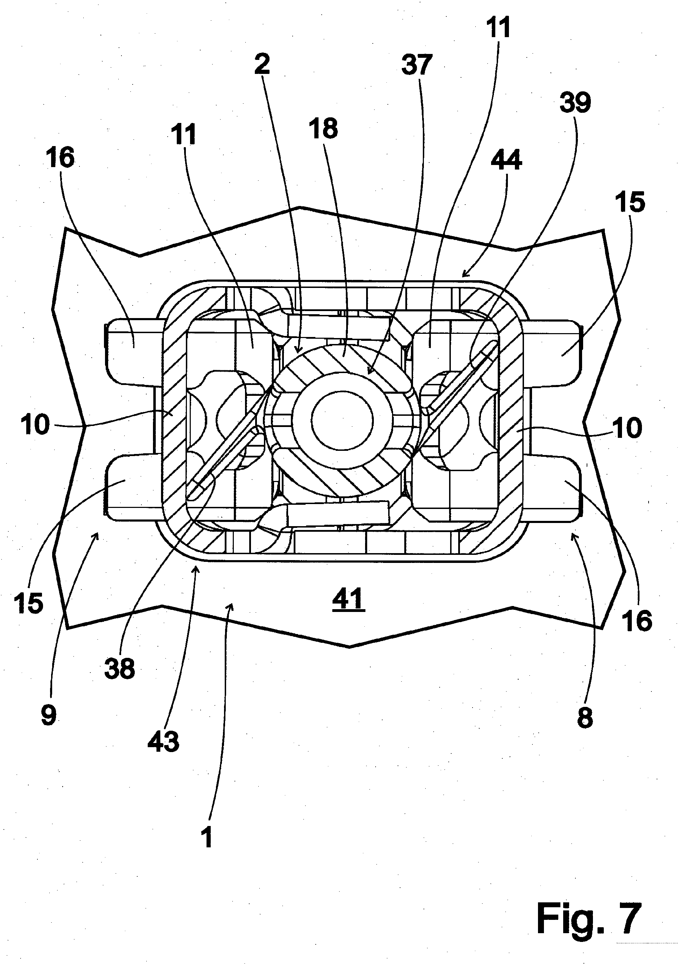

Fig. 7 zeigt in einem Querschnitt durch den Fußabschnitt 37 die Vormontageanordnung gemäß Fig. 1 und Fig. 2, bei der die dem Fußabschnitt 37 abgewandten freien Enden der Federzungen 38, 39 an den radial nach innen weisenden Innenseiten der Außenflügel 10 anliegen, wobei die Federzungen 38, 39 in der Vormontageanordnung durch geringes Einbiegen in Richtung radial nach innen geringfügig vorgespannt und die Drehanschlagsnocken 27, 28 des in dem Befestigungselement 1 drehbar gelagerten Drehschaftes 18 in Anschlag mit den Drehanschlagszungen 25, 26 gehalten sind.

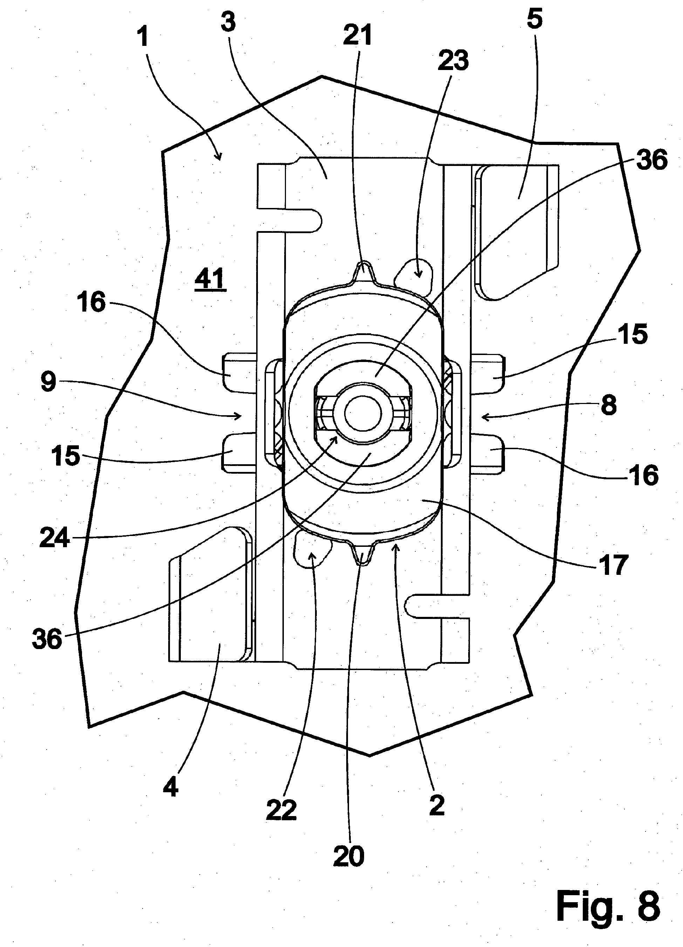

Fig. 8 zeigt die Vormontageanordnung des Befestigungselementes 1 und des Anzeigeelementes 2 gemäß Fig. 1 und Fig. 2 vor Beginn des Montagevorganges in einer Draufsicht auf die Oberseite der Deckplatte 3. Aus Fig. 8 ist ersichtlich, dass in der Vormontageanordnung die Verbindungslinie zwischen den Anzeigevorsprüngen 20, 21 im Wesentlichen parallel zu der Längsseite der Deckplatte 3 verläuft und die Anzeigevorsprünge 20, 21 in Umfangsrichtung einen Abstand von den Referenzausnehmungen 22, 23 aufweisen.

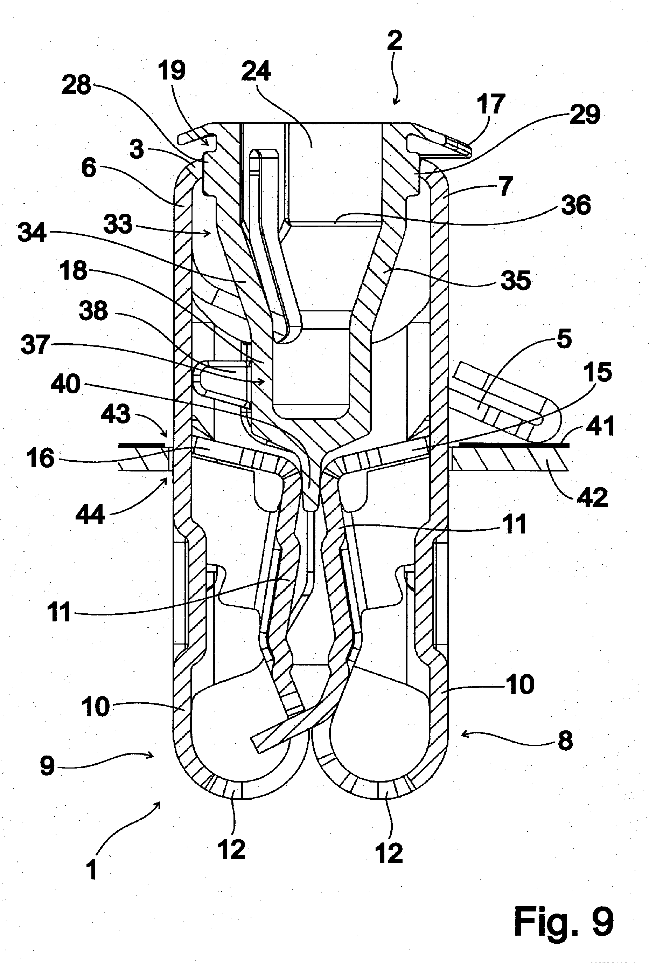

Fig. 9 zeigt in einem Längsschnitt entsprechend Fig. 5 das Ausführungsbeispiel gemäß Fig. 1 und Fig. 2 während des Montagevorganges in einer Zwischenmontageanordnung bei Aufgleiten der Abstützwangen 15, 16 an dem Rand der Anbauteilausnehmung 43 und der Trägerteilausnehmung 44 mit maximal nach radial innen eingefederten Innenflügeln 11. Aus Fig. 9 ist ersichtlich, dass in dieser Phase des Montagevorganges die Innenflügel 11 so auf den Einwirkabschnitt 40 einwirken, dass dieser mit seinen Flachseiten im Wesentlichen unter Drehen des Drehschaftes 18 parallel zu den Außenflügeln 10 beziehungsweise den Innenflügeln 11 ausgerichtet ist.

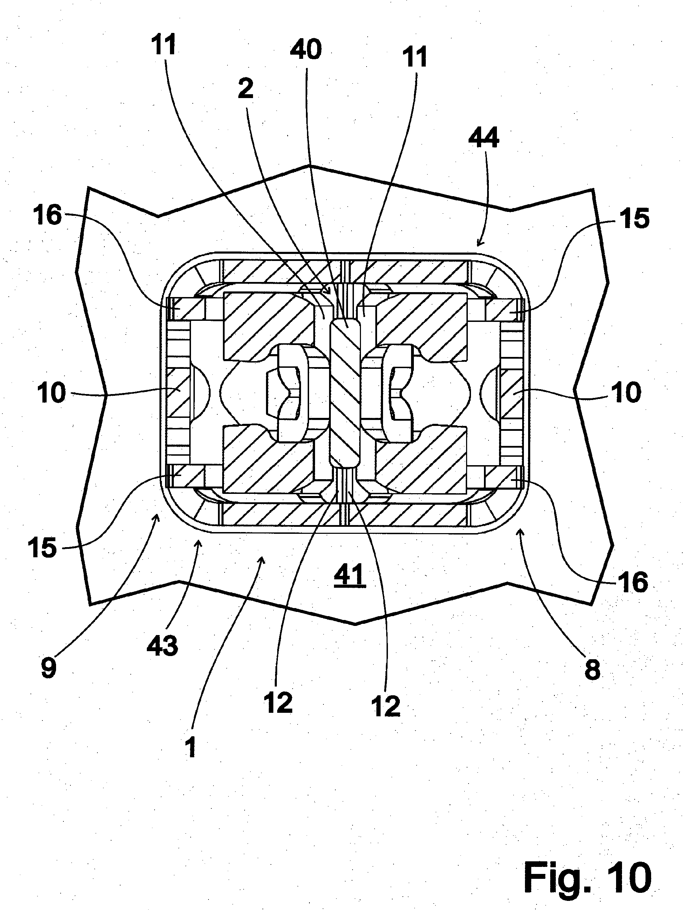

Fig. 10 zeigt in einem Querschnitt durch den Einwirkabschnitt 40 entsprechend Fig. 5 die Zwischenmontageanordnung gemäß Fig. 9. Aus Fig. 10 ist ersichtlich, dass die radial nach innen gewandten Flachseiten der Innenflügel 11 flächig an den nach radial außen gewandten Flachseiten des Einwirkabschnittes 40 anliegen.

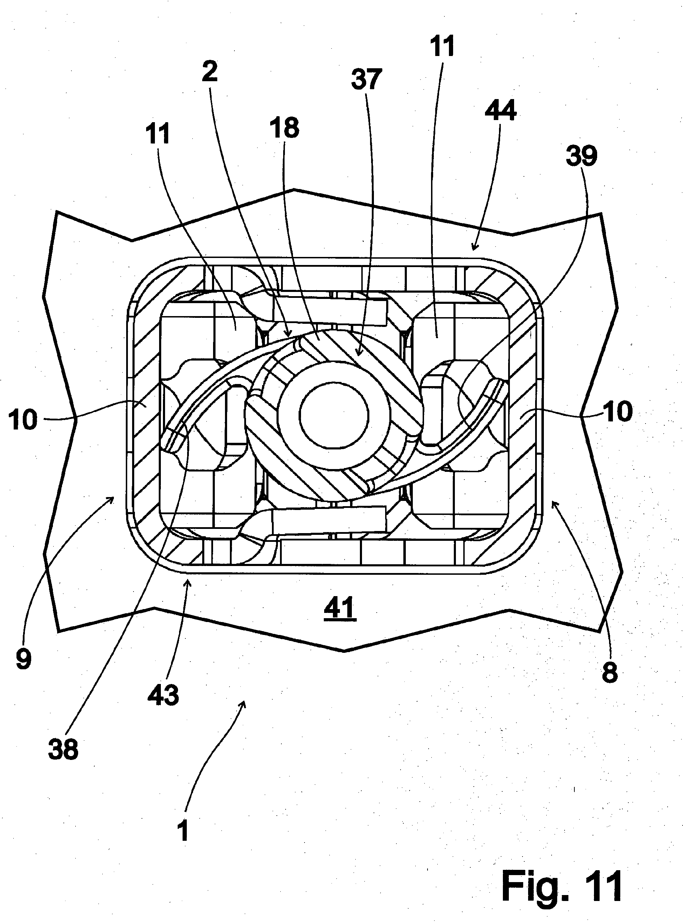

Fig. 11 zeigt im Querschnitt entsprechend Fig. 7 die Zwischenmontageanordnung gemäß Fig. 9 mit einem gegenüber der Vormontageanordnung maximal verdrehten Drehschaft 18. Der Darstellung gemäß Fig. 11 lässt sich entnehmen, dass in dieser Phase des Montagevorganges die Federzungen 38, 39 maximal vorgespannt sind.

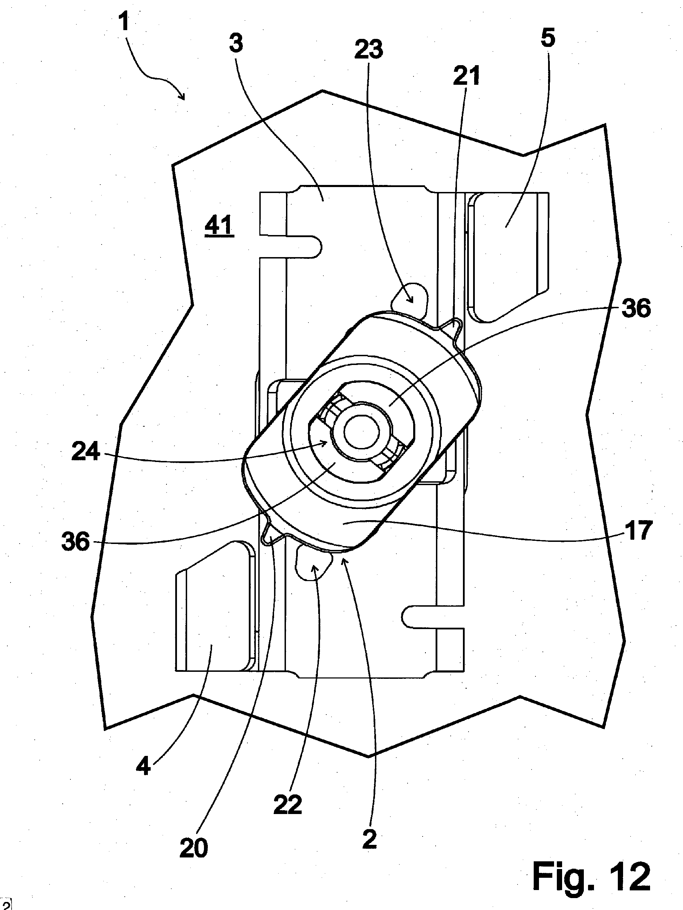

Fig. 12 zeigt in einer Draufsicht entsprechend Fig. 8 das gegenüber dem drehfest in dem Trägerteil 42 verankerte Befestigungselement 1 maximal verdrehte Anzeigeelement 2, das nunmehr so ausgerichtet ist, dass die Anzeigevorsprünge 20, 21 von der Vormontagestellung gemäß Fig. 8 sich in der Darstellung gemäß Fig. 12 im Uhrzeigersinn in Umfangsrichtung über die Referenzausnehmungen 22, 23 hinaus bewegt haben und nunmehr in Bezug auf die Vormontagestellung gemäß Fig. 8 auf der anderen Seite der nächst benachbarten Referenzausnehmungen 22, 23 angeordnet sind. Würde beispielsweise der Montagevorgang nicht oder nur unwesentlich weiter fortgesetzt, blieben die Anzeigevorsprünge 20, 21 im Wesentlichen in der in Fig. 12 dargestellten maximal überdrehten Zwischenmontagestellung und ließen ein Feststellen eines nicht korrekt abgeschlossenen Montagevorganges zu.

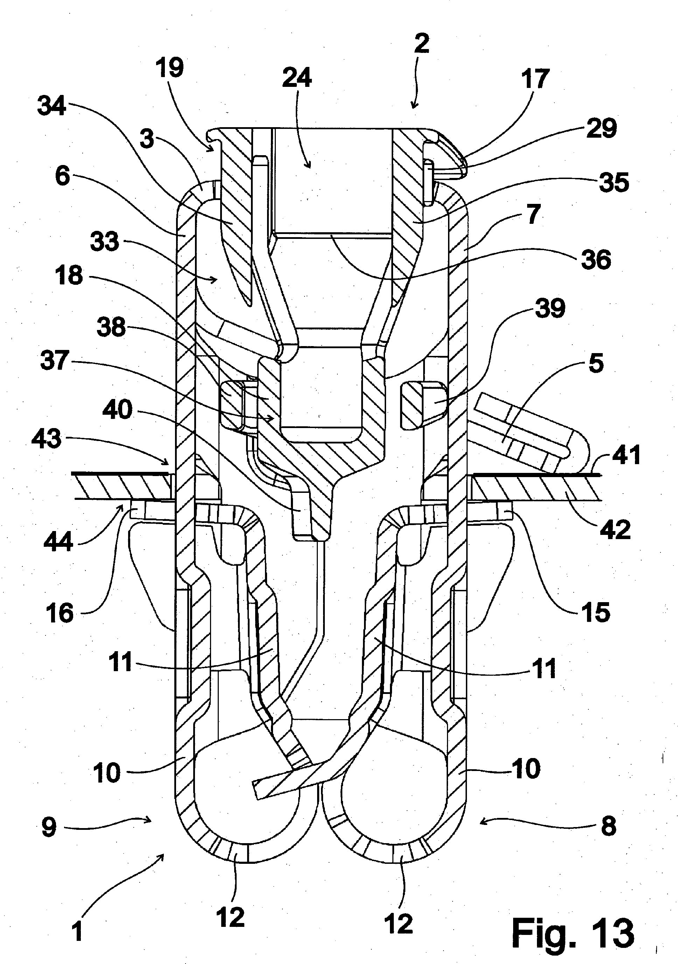

Fig. 13 zeigt in einem Längsschnitt entsprechend Fig. 5 und Fig. 9 eine Endmontageanordnung des Befestigungselementes 1, des Anzeigeelementes 2, des Anbauteiles 41 und des Trägerteiles 42 nach einem ordnungsgemäßen Abschluss des Montagevorganges zum Befestigen des Anbauteiles 41 an dem Trägerteil 42, bei dem die Abstützwangen 15, 16 das Trägerteil 42 auf der dem Anbauteil 41 gegenüber liegenden Seite hintergreifen und die Abstützarme 4, 5 auf der dem Trägerteil 42 abgewandten Seite des Anbauteiles 41 aufliegen. In dieser Endmontageanordnung sind die wieder relaxierten Innenflügel 11 erneut von dem Einwirkabschnitt 40 beabstandet. Weiterhin lässt sich aus Fig. 13 erkennen, dass aufgrund der durch den Kuppelschirm 17 ausgeübten Vorspannung in axialer Richtung bei Erreichen der maximalen Zwischenmontagestellung des Anzeigeelementes 2 gemäß Fig. 9 bis Fig. 12 die Kombinationsanschlagsnocken 29, 30 aus ihrem Hintergriff mit den Höhenanschlagszungen 31, 32 heraus getreten sind und das Anzeigeelement 2 in axialer Richtung so bewegt worden ist, dass sich der Abstand in axialer Richtung zwischen dem Einwirkabschnitt 40 und den Umbiegeabschnitten 12 vergrößert hat.

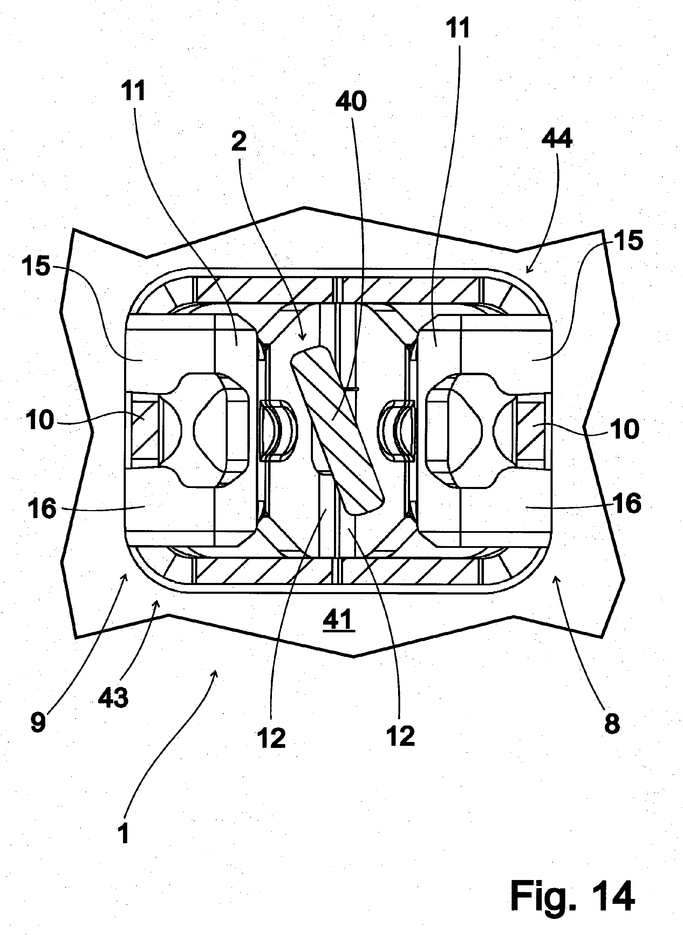

Fig. 14 zeigt in einem Querschnitt entsprechend Fig. 6 und Fig. 10 die erneut gegenüber den Innenflügeln 11 schräg gestellte Ausrichtung des Einwirkabschnittes 40, der nunmehr erneut frei liegt.

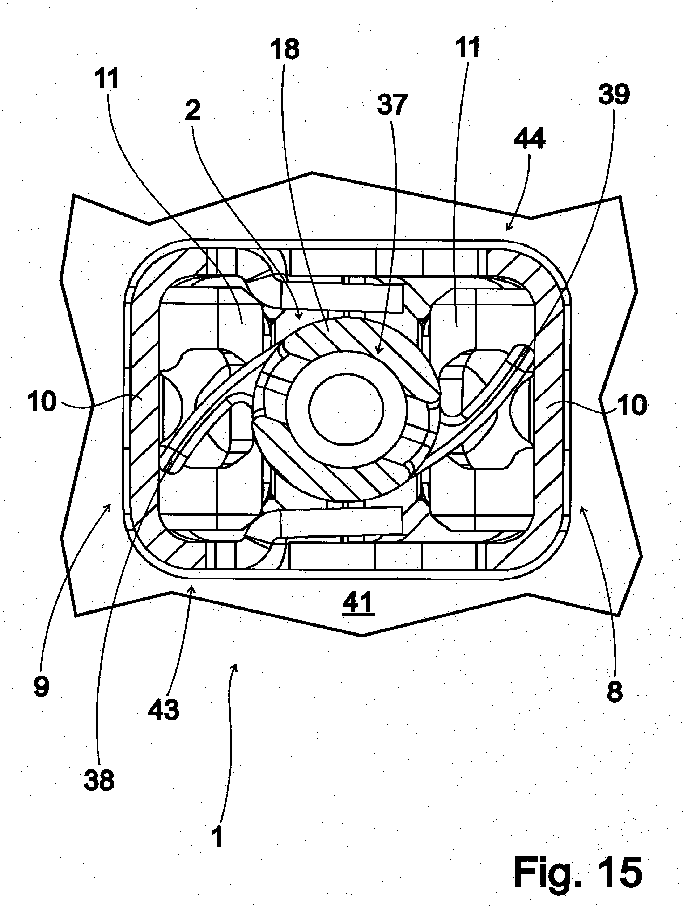

Fig. 15 zeigt in einem Querschnitt entsprechend Fig. 7 und Fig. 11 die weiterhin vorgespannten Federzungen 38, 39, die jedoch gegenüber der Maximalstellung während des Montagevorganges in der Zwischenmontageanordnung gemäß Fig. 11 merklich relaxiert sind.

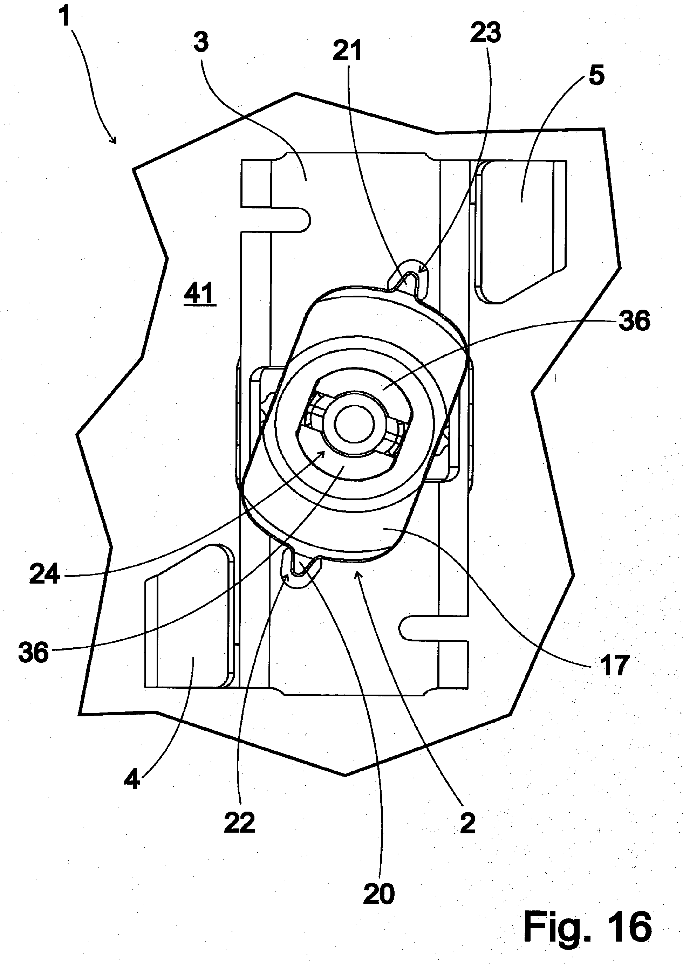

Fig. 16 zeigt in einer Draufsicht entsprechend Fig. 8 und Fig. 12 als einen definierten Montageanzeigezustand eine Endmontagestellung des Anzeigeelementes 2 in Bezug auf das Befestigungselement 1 in der Endmontageanordnung gemäß Fig. 13. In der Endmontagestellung sind bei korrekter Positionierung des Befestigungselementes 1 die Anzeigevorsprünge 20, 21 im Wesentlichen mittig in axialer Richtung fluchtend mit den Referenzausnehmungen 22, 23 ausgerichtet und lassen unmittelbar die korrekte Einnahme der Endmontageanordnung beispielsweise durch optische Sensoren detektieren und dokumentieren. Ein einfaches Drehen des Anzeigeelementes 2 aus der Endmontagestellung ist durch den seitlichen Anschlag der Kombinationsanschlagsnocken 29, 30 mit den Höhenanschlagszungen 31, 32 blockiert.

Zum Überführen der Stellung des Anzeigeelementes 2 in Bezug auf das Befestigungselement 1 von der Anzeige einer korrekten Endmontageanordnung gemäß Fig. 16 in die Vormontagestellung ist nach Einführen eines Werkzeuges in die Werkzeugaufnahmevertiefung 24 bis zum Anschlag an die Tiefenanschlagstufen 36 das Anzeigeelement 2 in axialer Richtung und nach erneutem Aufbauen einer Vorspannung in dem Kuppelschirm 17 in Richtung des Befestigungselementes 1 zu bewegen, bis die Kombinationsanschlagsnocke 29, 30 aus ihrem seitlichen Anschlag mit den Höhenanschlagszungen 31, 32 befreit sind und die Kombinationsanschlagsnocken 29, 30 in einen abschnittsweisen Hintergriff mit den Höhenanschlagszungen 31, 32 überführbar sind.

## Patentansprüche

1. Vorrichtung zum Befestigen eines Anbauteiles (41) an einem Trägerteil (42) mit Montagekontrolle mit einem in radialer Richtung verformbare Befestigungsarme (8, 9) aufweisenden Befestigungselement (1), mit denen durch Hintergriff des Trägerteiles (42) das Anbauteil (41) an dem Trägerteil (42) befestigbar ist, und mit einem Anzeigeelement (2), das mit dem Befestigungselement (1) derart zusammenwirkt, dass bei einer ordnungsgemäßen Befestigung des Anbauteiles (41) an dem Trägerteil (42) nach einem Montagevorgang ein definierter Montageanzeigezustand eingenommen ist, **dadurch gekennzeichnet, dass** das Anzeigeelement (2) einen länglichen Drehschaft (18) aufweist, der wenigstens abschnittsweise zwischen den Befestigungsarmen (8, 9) angeordnet und so ausgebildet ist, dass sich der Drehschaft (18) während des Montagevorganges durch Einwirken wenigstens eines Befestigungsarmes (8, 9) auf den Drehschaft (18) um seine Längsachse dreht.

2. Vorrichtung nach Anspruch 1, **dadurch gekennzeichnet, dass** das Befestigungselement (1) zwei Befestigungsarme (8, 9) aufweist, die jeweils einen Außenflügel (10) und einen Innenflügel (11) aufweisen, dass der Drehschaft (18) zwischen den Innenflügeln (11) angeordnet ist und dass beide Innenflügel (11) gleichartig auf den Drehschaft (18) einwirken.

3. Vorrichtung nach Anspruch 1 oder Anspruch 2, **dadurch gekennzeichnet, dass** der Drehschaft (18) über einen wenigstens eine Flachseite aufweisenden Einwirkabschnitt (40) verfügt, wobei auf die oder jede Flachseite jeweils ein Befestigungsarm (8, 9) einwirkt.

4. Vorrichtung nach Anspruch 3, **dadurch gekennzeichnet, dass** der Einwirkabschnitt (40) an einem Fußabschnitt (37) des Drehschaftes (18) und den Drehschaft (18) abschließend angeordnet ist.

5. Vorrichtung nach Anspruch 4, **dadurch gekennzeichnet, dass** der Einwirkabschnitt (40) klingenartig mit einem rechteckigen Querschnitt und zwei Flachseiten ausgebildet ist.

6. Vorrichtung nach einem der Ansprüche 1 bis 5, **dadurch gekennzeichnet, dass** der Drehschaft (18) mit einer Federanordnung (38, 39) zusammenwirkt, die derart mit dem Befestigungselement (1) zusammenwirkt, dass das Anzeigeelement (2) während des Montagevorganges bezüglich einer Drehung um seine Längsachse vorgespannt ist.

7. Vorrichtung nach Anspruch 6, **dadurch gekennzeichnet, dass** die Federanordnung wenigstens eine Federzunge (38, 39) aufweist, die an dem Drehschaft (18) radial nach außen vorstehend ausgebildet und elastisch ist.

8. Vorrichtung nach Anspruch 6 oder Anspruch 7, **dadurch gekennzeichnet, dass** an dem Anzeigeelement (2) eine Nockenanordnung (27, 28, 29, 30) und an dem Befestigungselement eine Anschlagsanordnung (25, 26, 31, 32) ausgebildet sind, mit der zum Abschluss des Montagevorganges in der Endmontageanordnung ein einfaches Drehen des Anzeigeelementes (2) aus dem definierten Montageanzeigezustand blockiert ist.

## Claims

1. Device for fastening an added part (41) to a carrying part (42) where the fitted state is checked, having a fastening member (1) which has fastening legs (8, 9) deformable in the radial direction by which the added part (41) can be fastened to the carrying part (42) as a result of their engaging behind the carrying part (42), and having an indicating member (2) which co-operates with the fastening member (1) in such a way that a defined state indicating the fitted state is assumed after a fitting process if the added part (41) is properly fastened to the carrying part (42), **characterised in that** the indicating member (2) has an elongated rotary stem (18) of which at least a portion is arranged between the fastening legs (8, 9) and which is so adapted that, during the fitting process, the rotary stem (18) rotates on its longitudinal axis due to the action of at least one fastening leg (8, 9) on the rotary stem (18).

2. Device according to claim 1, **characterised in that** the fastening member (1) has two fastening legs (8, 9) which each have an outer limb (10) and an inner limb (11), **in that** the rotary stem (18) is arranged between the inner limbs (11), and **in that** both inner limbs (11) act on the rotary stem (18) in the same way.

3. Device according to claim 1 or claim 2, **characterised in that** the rotary stem (18) has a portion (40) to be acted on which has at least one flat side, a respective fastening leg (8, 9) acting on the or each flat side.

4. Device according to claim 3, **characterised in that** the portion (40) to be acted on is arranged on a foot portion (37) of the rotary stem (18) and is arranged to terminate the rotary stem (18).

5. Device according to claim 4, **characterised in that** the portion (40) to be acted on is configured after the fashion of a blade, being of rectangular cross-section and having two flat sides.

6. Device according to one of claims 1 to 5, **characterised in that** the rotary stem (18) co-operates with a resilient arrangement (38, 39) which co-operates with the fastening member (1) in such a way that, during the fitting process, the indicating member (2) is pre-loaded with respect to rotation on its longitudinal axis.

7. Device according to claim 6, **characterised in that** the resilient arrangement has at least one resilient tongue (38, 39), which latter is formed on the rotary stem (18) to project outwards radially and is elastic.

8. Device according to claim 6 or claim 7, **characterised in that** a system of lugs (27, 28, 29, 30) is formed on the indicating member (2) and a system of stops (25, 26, 31, 32) is formed on the fastening member, by which simple rotation of the indicating member (2) out of the defined state indicating the fitted state is blocked in the fully fitted position to complete the fitting process.

## Revendications

1. Dispositif de fixation d'un composant rapporté (41) sur un élément faisant office de support (42), comportant un témoin de bon montage, comprenant un organe de fixation (1) muni de pattes de fixation (8, 9) capables de se déformer dans le plan radial, au moyen desquelles le composant rapporté peut être fixé sur l'élément faisant office de support (42) par l'action de cramponnement qu'elles exercent sur l'arrière dudit élément faisant office de support (42), et comprenant un dispositif indicateur (2) qui opère en combinaison avec l'organe de fixation (1) dans des conditions telles qu'une fois l'opération de montage effectuée, si la fixation du composant rapporté (41) sur l'élément faisant office de support (42) a bien été réalisée dans les conditions qui s'imposent, il vient se placer dans une position bien définie d'indication de bon montage, **caractérisé en ce que** le dispositif indicateur (2) comporte un axe de révolution de forme allongée (18) qui est disposé au moins en partie entre les pattes de fixation (8, 9) et qui est agencé de telle façon que l'axe de révolution (18) effectue un mouvement de rotation sur lui-même dans le plan correspondant à son axe longitudinal sous l'action exercée par au-moins une patte de fixation (8, 9) sur ledit axe de révolution (18).

2. Dispositif selon la revendication 1, **caractérisé en ce que** l'organe de fixation (1) comporte deux pattes de fixation (8, 9), qui sont respectivement munies d'un segment extérieur formant ailette (10) et d'un segment intérieur formant ailette (11), **en ce que** l'axe de révolution (18) est disposé entre les segments intérieurs formant ailettes (11) et **en ce que** les deux segments intérieurs formant ailettes (11) exercent une action de même nature sur l'axe de révolution (18).

3. Dispositif selon la revendication 1 ou la revendication 2, **caractérisé en ce que** l'axe de révolution (18) comporte une portion d'actionnement (40) qui présente au moins une face plate, une patte de fixation (8, 9) exerçant respectivement en l'occurrence une action sur la ou sur chaque face plate.

4. Dispositif selon la revendication 3, **caractérisé en ce que** la portion d'actionnement (40) est disposée au niveau d'une portion de pied (37) de l'axe de révolution (18) et s'étend jusqu'à constituer la portion terminale de l'axe de révolution (18).

5. Dispositif selon la revendication 4, **caractérisé en ce que** la portion d'actionnement (40) a la forme d'une lame de section rectangulaire et comporte deux côtés plats.

6. Dispositif selon l'une des revendications 1 à 5, **caractérisé en ce que** l'axe de révolution (18) opère en combinaison avec un agencement de ressorts (38, 39), qui exerce une action conjuguée à celle du dispositif de fixation (1), consistant **en ce que** le dispositif indicateur (2) est maintenu durant le processus de montage dans une situation de précontrainte l'empêchant de pivoter sur lui-même dans le plan correspondant à son axe longitudinal.

7. Dispositif selon la revendication 6, **caractérisé en ce que** l'agencement de ressort se compose d'au-moins une languette élastique (38, 39) qui est disposée sur l'axe de révolution (18) en faisant saillie vers l'extérieur dans le plan radial et qui est élastique.

8. Dispositif selon la revendication 6 ou la revendication 7, **caractérisé en ce qu'**il est prévu, sur le dispositif indicateur (2), un agencement d'ergots (27, 28, 29, 30) et sur l'organe de fixation un agencement de butées (25, 26, 31, 32), ce qui fait qu'en fin du processus de montage dans la position de montage finale une simple rotation du dispositif indicateur (2) à partir de la position définie d'indication de bon montage est rendue impossible.
